# EUROPEAN PATENT SPECIFICATION

(11) **EP 2 119 597 B1**
(45) Date of publication and mention of the grant of the patent: **26.01.2011**
(21) Application number: 09159062.0
(22) Date of filing: 29.04.2009
(51) Int. Cl.: B60R 9/058

(54) **A fastening device for a roof rack to a motor vehicle and a roof rack comprising the fastening device**
Eine Befestigungsvorrichtung für eine Dachreling und eine Dachreling mit der Befestigungsvorrichtung
Dispositif de fixation pour une galerie de toit et une galerie de toit comprenant le dispositif de fixation

(30) Priority: 15.05.2008 IT MO20080142
(43) Date of publication of application: 18.11.2009
(73) Proprietor: Fami S.R.L., 36027 Rosà (VI) (IT)
(72) Inventor: Camellini, Giancarlo, 41018 San Cesario Sul Panaro (Modena) (IT)
(74) Representative: Colò, Chiara

(56) References cited:
- DE-A1- 3 138 146
- DE-A1- 4 001 546
- FR-A- 1 004 722

## Description

The invention relates to a fastening device for a roof rack to a motor vehicle and a roof rack comprising the fastening device. In particular the invention relates to the equipping of vans or other vehicles for commercial use.

Roof racks of various types, mounted on the roofs of motor vehicles of various nature, are normally used in the prior art. In particular, the equipping of commercial vehicles and vans usually requires the installation of an upper frame destined for location of material which is not housable in the loading compartment. The frames exhibit, in the simplest form thereof, two lateral support bars mounted longitudinally of the vehicle, connected to one another by two or more crossbars.

The described frames are fixed to the vehicles to be equipped by means of a plurality of connecting organs, in general four or six, of great constructional simplicity. The connecting organs are constituted by short lateral support arms, associable to the longitudinal bars or crossbars, bolted to the points of attachment exhibited on the upper surface of vans.

The connecting organs of the prior art are designed to adapt to a determined form and size of the vehicle to be equipped. They are thus dedicated to a determined vehicle or at most to a series of vehicles having similar structural characteristics. This specialisation of use exhibits an evident disadvantage in the connecting organs of the prior art and the roof racks using them.

Further, the single vehicles of a same vehicle model exhibit differences, though they fall within admitted tolerances, which make correct alignment of the roof rack frame bars difficult. This leads to the use, during mounting, of spacers and/or adapters of various types for fixing the fastening elements. This, apart from complicating the mounting operation, which can therefore take rather long times, does not enable a positioning guaranteeing a correct alignment of the bars of the roof racks such that the definitive and stable fixing of the bars of the roof rack inevitably produces deformations which induce undesired tensions in the attachment points.

The drawback which might result as a consequence, apart from deforming the bars and the frame (with the result that it does not allow some uses involving the use of slidable guides), is the breakage of the anchoring points, which is difficult to avoid in the applications of the prior art when the attachment points are located in the upper part of the vehicle's roof. This happens with modem vehicles, which are usually not provided with a gutter, which in the past was used for the hooking-on of the rack.

Prior art document DE3138146 discloses fastening devices for roof racks according to the preamble of claim 1 which are capable of allowing a rotational adjustment about a horizontal transversal axis in order to compensate misalignments which exists between the different portions of the longitudinal bars or crossbars of the vehicle to which the fastening devices are grasped.

The main aim of the present invention is to provide a hooking device and a corresponding roof rack which do not suffer from the drawback in the prior art.
Accordingly there B provided a fastening device as defined by the features of claim 1.

An advantage of the device of the present invention derives from its flexibility of use, which enables the use thereof on motor vehicles having different form and dimensional characteristics.

A further advantage of the device of the present invention is determined by the guaranteed stability of the connection between the motor vehicle and the roof rack frame.

A further advantage of the device of the present invention is the structural simplicity and the limited production costs thereof.

Further characteristics and advantages of the invention will better emerge from the detailed description that follows of a non-exclusive preferred embodiment thereof, provided by way of non-limiting example in the accompanying figures of the drawings, in which:
figure 1 is a lateral view of a motor vehicle for transport to which is coupled a roof rack of the present invention;
figure 2 is a front view of the motor vehicle for transport of figure 1;

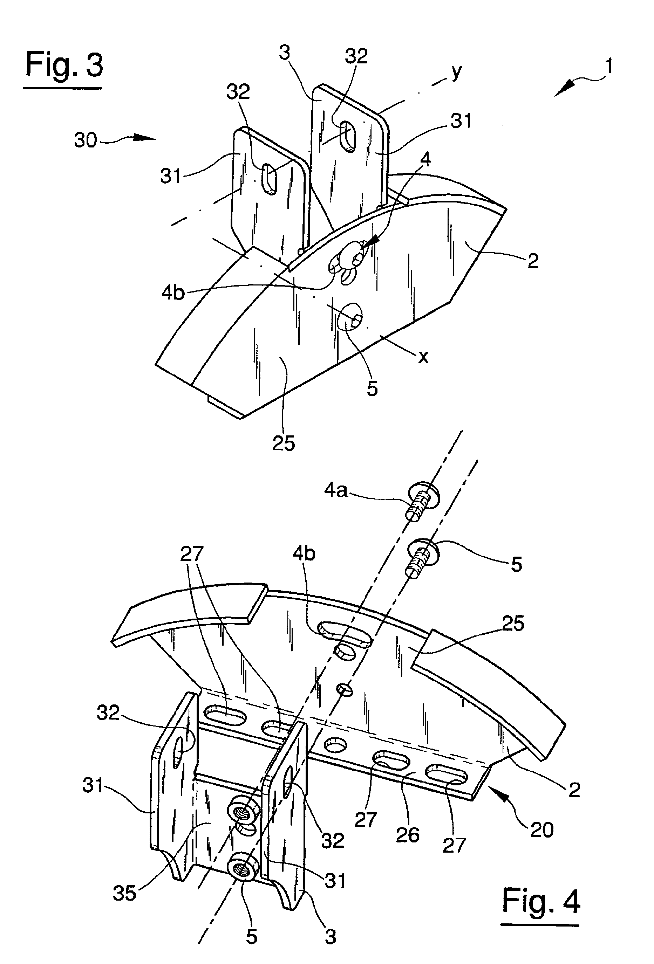

figure 3 is a perspective view of the hooking device according to the present invention;
figure 4 is an exploded view of the device of figure 3.

With reference to the figures of the drawings, 1 denotes a fastening device for a roof rack 100 to a motor vehicle 101. The roof rack 100 is preferably though not necessarily of the type illustrated in the figures, i.e. comprising two longitudinal support bars connected by a plurality of crossbars. The motor vehicle 101 is preferably a van having attachment points for fixing of fatening devices arranged on the upper surface of the roof.

The fastening device 1 comprises anchoring means 20 predisposed to associate the fastening device 1 solidly to a motor vehicle 101 and connecting means 30 predisposed to associate the fastening device 1 to a roof rack 100. In particular, the fastening device 1 is characterised with respect to known connecting organs in that it comprises: a fixed element 2, solidly associable to the motor vehicle 101 via the anchoring means 20 and a mobile element 3 connected thereto, associable to the roof rack 100 using the connecting means 30. The mobile element 3 can modify the position thereof relative to the fixed element 2 for configuring the fastening device 1 by adapting it to the morphological and dimensional characteristics of the roof rack 100 and the motor vehicle 101, thus realising the above-described aim of the present invention.

In the constructionally simplest form, and therefore the preferred form, the possibility of relative movement between the two elements of the fastening device is realised by hooking the mobile element 3 to the fixed element 2 according to a first hinging axis x. The first hinging axis x is preferably a horizontal axis which is transversal with respect to the longitudinal development of the vehicle 101 to which the fastening device 1 is associated; in this way, by advantageously orientating the two opposite device which support the roof rack 100 at a section thereof, it is possible to adapt the structure to the longitudinal position of the attachment points provided on the vehicle 101.

The fixed element 2 and the mobile element 3 respectively exhibit a first and a second connecting portion 25, 35 which are planar and juxtaposed and associated by hinge means 5 which hinge the mobile element 3 to the fixed element 2 along the first hinge axis x. The hinge means 5 are constituted, in the illustrated embodiment, by a hinge bolt inserted in special through-holes afforded in the connection portions 25, 35; alternative embodiments could involve use of a rivet or a hinge of another type.

The fastening device 1 advantageously comprises stop means 4 predisposed to limit the angular excursion of the mobile element 3 with respect to the fixed element 2.

In the illustrated embodiment, the stop means 4 comprise a pin 4a solidly associated to one of the connecting portions 25, 35 and slidable internally of a slot 4b afforded on the other connecting portion 25, 35. In the illustrated example, the slot 4b describes an arc of circumference and is afforded on the first connecting portion 25, while the pin 4a is constituted by the stem of a bolt which crosses a through-hole in the second connecting portion 35. By applying a locking torque to the bolt it is therefore possible to solidly associate the two connecting portions 25, 35, blocking the locking device in a desired configuration.

A centring hole of a same diameter is afforded in both connecting portions 25, 35. The two centring holes are superposed at a centred configuration of the fastening device 1, i.e. when the longitudinal extension of the mobile element 3 is substantially perpendicular to the surface of the vehicle 101 roof to which the fixed element 2 is associated.

The above-described connecting means 30 enable the roof rack 100 to be hinged to the mobile element 3 of the device 1 at a second hinge axis y which is substantially perpendicular to the first hinge axis x. This arrangement enables the fastening device 1 to be adapted to motor vehicles 101 having different roof curvatures, i.e. different inclinations of the attachment points provided on the upper surface of the vehicle.

In particular, the connecting means 30 comprise two arms 31 of the mobile element 3 which exhibit two connecting slots 32 predisposed for fastening the roof rack 100 along the second hinge axis y. The connecting slots 32, as can be seen in the accompanying figures of the drawings, have an elongate shape such that a pin is associable thereto, which pin is arranged substantially horizontally independently of the angular configuration assumed by the fastening device 1. The horizontal pin, idle or solidly associated to the roof rack 100, realises a hinging of the rack 100 with the fastening device 1. By hooking the pin to different sections of the frame crossbar the structure can be adapted to the transversal position of the attachment points predisposed on the vehicle 101.

In the illustrated embodiment, the mobile element 3 of the fastening device 1 is a fork exhibiting a planar central second connecting portion 35, which is hinged to the fixed element 2; two arms 31 of the fork extend from the second connection portion 35, which two arms 31 are planar and reciprocally parallel and perpendicular to the second connecting portion 35. The fixed element 2, on the other hand, comprises a first connecting portion 25 which is also planar, connected to the mobile element 3. The first connecting portion 25 is shaped as a portion of circular sector. The anchoring means 20 comprise an attaching portion 26 which is planar, contiguous and perpendicular to the first connecting portion 25. The attaching portion 26 exhibits a plurality of anchoring slots 27 predisposed to constrain it, by means of bolts or similar connecting means, to the attachment points exhibited on the vehicle 101.

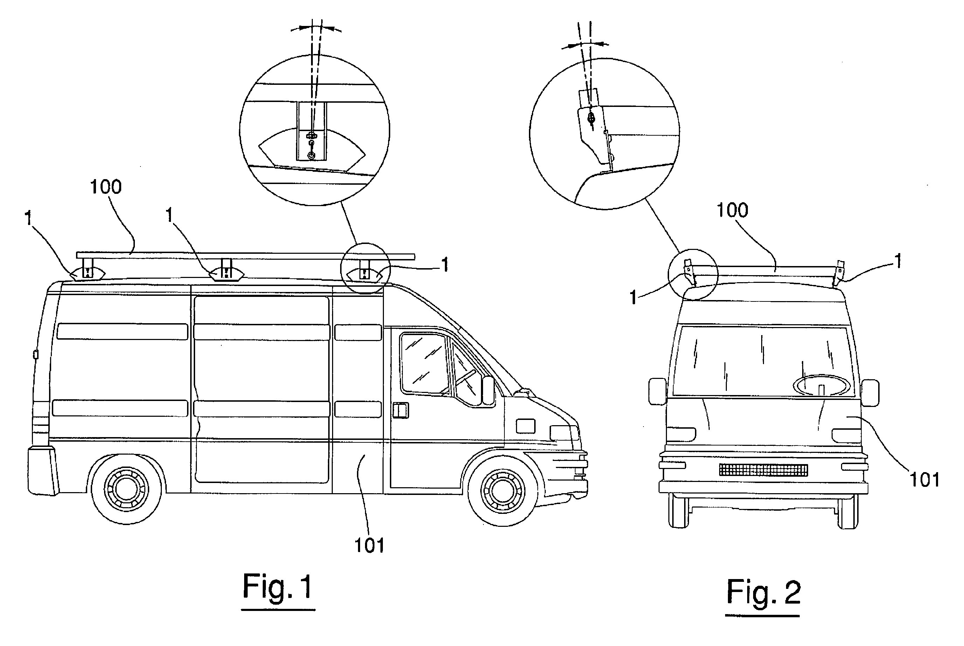

The invention also relates to an object-bearing device comprising a roof rack 100 and a plurality of fastening devices 1 of the above-described type, predisposed to couple the roof rack 100 to the roof of a motor vehicle 101. As can be deduced from the above description, the fastening devices 1 are preferably equal in number and more than two, such as to be able to associate to the lateral ends of each of the crossbars of the roof rack 100. The characteristics of the invention are visually well documented in the enlarged details of figures 1 and 2 which clearly show the relative inclinations of the constituent elements which enable a mounting of the rack 100 with an adaptation for the curvature of the vehicle roof without creating dangerous hyperstatic stresses.

## Claims

1. A fastening device (1) of a roof rack (100) to a motor vehicle (101), comprising anchoring means (20) predisposed for solidly associating the fastening device (1) to a motor vehicle (101) and connecting means (30) predisposed for associating the device to the roof rack (100), the fastening device further comprising a fixed element (2), solidly associable to the motor vehicle (101) via the anchoring means (20) and a mobile element (3) connected thereto, associable to the roof rack (100) via the connecting means (30); the mobile element (3) being able to modify a position thereof in relation to the fixed element (2) in order to configure the fastening device (1) by adapting the fastening device (1) to morphological and dimensional characteristics of the roof rack (100) and the motor vehicle (101), wherein the mobile element (3) is hinged to the fixed element (2) at a first hinging axis (x), **characterized in that** the connecting means (30) enable the roof rack (100) to be hinged to the mobile element (3) of the device (1) according to a hinge axis (y) which is substantially perpendicular to the first hinging axis (x).

2. The fastening device (1) of claim **1**, **characterised in that** it comprises means (4) predisposed to limit an angular excursion of the mobile element (3) of the device (1) with respect to the fixed element (2) thereof.

3. The fastening device (1) of claim **2**, **characterised in that** the fixed element (2) and the mobile element (3) respectively exhibit a first connecting portion and a second connecting portion (25, 35) which are planar and juxtaposed and associated by hinging means (5) which hinge the mobile element (3) to the fixed element (2) along the first hinging axis (x).

4. The fastening device (1) of claim **3**, **characterised in that** the means (4) comprise a pin (4a) which is solidly associated to one of the connecting portions (25, 35) and which is slidable internally of a slot (4b) afforded on the other connecting portion.

5. The fastening device (1) of claim **4**, **characterised in that** the hinging means (5) are constituted by a hinge bolt and **in that** the pin (4a) is constituted by a stem of a bolt.

6. The fastening device (1) of claim **1**, **characterised in that** the connecting means (30) comprise two arms (31) of the mobile element (3) which exhibit two opposite connecting slots (32) predisposed for hinging the roof rack (100) along the second hinging axis (y).

7. The fastening device (1) of claim **6**, **characterised in that** the mobile element (3) is a fork which exhibits a central and planar second connecting portion (35) which is hinged to the fixed element (2), from which second connecting portion (35) two arms (31) project which are planar and parallel to one another and perpendicular to the second connecting portion (35).

8. The fastening device (1) of one of the preceding claims, **characterised in that** the fixed element (2) comprises a first connecting portion (25) which is planar and connected to the mobile element (3); the anchoring means (20) comprise an attaching portion (26) which is planar and perpendicular to the first connecting portion (25) and which exhibits a plurality of anchoring slots (27).

9. An object-carrying device **characterised in that** it comprises a roof rack (100) and a plurality of fastening devices (1) as in one of the preceding claims, predisposed to couple the roof rack (100) to a roof of a motor vehicle (101).

## Patentansprüche

1. Befestigungsvorrichtung (1) für eine Dachreling (100) an einem Kraftfahrzeug (101), enthaltend Verankerungsmittel (20), vorgesehen für die feste Anbringung der Befestigungsvorrichtung (1) an einem Kraftfahrzeug (101), und Verbindungsmittel (30), vorgesehen zum Anschliessen der Vorrichtung an die Dachreling (100), wobei die Befestigungsvorrichtung ausserdem enthält: ein feststehendes Element (2), das mit Hilfe der Verankerungsmittel (20) fest mit dem Kraftfahrzeug (101) verbindbar ist, und ein an dieses angeschlossenes bewegliches Element (3), verbindbar mit der Dachreling (100) mit Hilfe der Verbindungsmittel (30); wobei das bewegliche Element (3) in der Lage ist, seine Position im Verhältnis zu dem feststehenden Element (2) zu verändern, um die Befestigungsvorrichtung (1) zu konfigurieren durch Anpassen der Befestigungsvorrichtung (1) an die morphologischen und dimensionalen Eigenschaften der Dachreling (100) und des Kraftfahrzeugs (101), bei welcher das bewegliche Element (3) an das feststehende Element (2) an einer ersten Scharnierachse (x) angelenkt ist, **dadurch gekennzeichnet, dass** die Verbindungsmittel (30) der Dachreling (100) ermöglichen, an das bewegliche Element (3) der Vorrichtung (1) angelenkt zu werden, und zwar in Übereinstimmung mit einer Scharnierachse (y), welche im wesentlichen lotrecht zu der ersten Scharnierachse (x) verläuft.

2. Befestigungsvorrichtung (1) nach Patentanspruch 1, **dadurch gekennzeichnet, dass** sie Mittel (4) enthält, die dazu vorgesehen sind, einen Winkelausschlag des beweglichen Elementes (3) der Vorrichtung (1) im Verhältnis zu deren feststehendem Element (2) zu begrenzen.

3. Befestigungsvorrichtung (1) nach Patentanspruch 2, **dadurch gekennzeichnet, dass** das feststehende Element (2) und das bewegliche Element (3) jeweils einen ersten Verbindungsabschnitt und einen zweiten Verbindungsabschnitt (25, 35) aufweisen, welche eben sind, nebeneinander liegen und durch Scharniermittel (5) verbunden sind, welche das bewegliche Element (3) an das feststehende Element (2) anlenken, und zwar entlang der ersten Scharnierachse (x).

4. Befestigungsvorrichtung (1) nach Patentanspruch 3, **dadurch gekennzeichnet, dass** die Mittel (4) einen Zapfen (4a) enthalten, welcher fest einem der Verbindungsabschnitte (25, 35) zugeordnet ist, und welcher verschiebbar ist im Inneren eines Schlitzes (4b), aufgewiesen von dem anderen Verbindungsabschnitt.

5. Befestigungsvorrichtung (1) nach Patentanspruch 4, **dadurch gekennzeichnet, dass** die Scharniermittel (5) aus einem Gelenkbolzen gebildet sind, und **dadurch**, dass der Zapfen (4a) aus dem Schaft eines Bolzen gebildet ist.

6. Befestigungsvorrichtung (1) nach Patentanspruch 1, **dadurch gekennzeichnet, dass** die Verbindungsmittel (30) zwei Arme (31) des beweglichen Elementes (3) enthalten, welche zwei sich gegenüberliegende Verbindungsschlitze (32) aufweisen, vorgesehen zum Anlenken der Dachreling (100) entlang der zweiten Scharnierachse (y).

7. Befestigungsvorrichtung (1) nach Patentanspruch 6, **dadurch gekennzeichnet, dass** das bewegliche Element (3) eine Gabel ist, welche einen mittleren und ebenen zweiten Verbindungsabschnitt (35) aufweist, der an das feststehende Element (2) angelenkt ist, von welchem zweiten Verbindungsabschnitt (35) aus sich zwei Arme (31) erstrecken, die eben und parallel zueinander sind und lotrecht zu dem zweiten Verbindungsabschnitt (35).

8. Befestigungsvorrichtung (1) nach einem der vorstehenden Patentansprüche, **dadurch gekennzeichnet, dass** das feststehende Element (2) einen ersten Verbindungsabschnitt (25) enthält, welcher eben und an das bewegliche Element (3) angeschlossen ist; wobei die Verankerungsmittel (20) einen Anschlussabschnitt (26) enthalten, welcher eben und lotrecht zu dem ersten Verbindungsabschnitt (25) ist und welcher eine Anzahl von Verankerungsschlitzen (27) aufweist.

9. Gepäckträgervorrichtung, **dadurch gekennzeichnet, dass** sie eine Dachreling (100) und eine Anzahl von Befestigungsvorrichtungen (1) wie in einem der vorstehenden Patentansprüche enthält, vorgesehen zum Anbringen der Dachreling (100) am Dach eines Kraftfahrzeuges (101).

## Revendications

1. Dispositif de fixation (1) d'une galerie de toit (100) à un véhicule motorisé (101), comprenant des moyens d'ancrage (20) prédisposés pour associer de manière solidaire le dispositif de fixation (1) à un véhicule motorisé (101), et des moyens de connexion (30) prédisposés pour associer le dispositif à la galerie de toit (100), le dispositif de fixation comprenant de plus un élément fixe (2), associable de manière solidaire au véhicule motorisé (101) par l'intermédiaire des moyens d'ancrage (20), et un élément mobile (3) relié à l'élément fixe (2), associable à la galerie de toit (100) par l'intermédiaire des moyens de connexion (30); l'élément mobile (3) pouvant modifier sa position par rapport à l'élément fixe (2) de manière à configurer le dispositif de fixation (1) en adaptant le dispositif de fixation (1) aux caractéristiques morphologiques et dimensionnelles de la galerie de toit (100) et du véhicule motorisé (101), dans lequel l'élément mobile (3) est encharné sur l'élément fixe (2) en correspondance d'un premier axe d'encharnement (x), **caractérisé en ce que** les moyens de connexion (30) permettent à la galerie de toit (100) d'être encharnée sur l'élément mobile (3) du dispositif (1) selon un axe d'encharnement (y) substantiellement perpendiculaire au premier axe d'encharnement (x).

2. Dispositif de fixation (1) selon la revendication 1, **caractérisé en ce qu'**il comprend des moyens (4) prédisposés pour limiter le déplacement angulaire de l'élément mobile (3) du dispositif (1) par rapport à son élément fixe (2).

3. Dispositif de fixation (1) selon la revendication 2, **caractérisé en ce que** l'élément fixe (2) et l'élément mobile (3) présentent respectivement une première portion de connexion et une seconde portion de connexion (25, 35) planaires et juxtaposées et associées par des moyens d'encharnement (5) qui encharnent l'élément mobile (3) sur l'élément fixe (2) le long du premier axe d'encharnement (x) .

4. Dispositif de fixation (1) selon la revendication 3, **caractérisé en ce que** les moyens (4) comprennent une broche (4a) associée de manière solidaire à l'une des portions de connexion (25, 35) et pouvant coulisser à l'intérieur d'une fente (4b) formée dans l'autre portion de connexion.

5. Dispositif de fixation (1) selon la revendication 4, **caractérisé en ce que** les moyens d'encharnement (5) sont constitués par un écrou d'encharnement et **en ce que** la broche (4a) est constituée de la tige d'un boulon.

6. Dispositif de fixation (1) selon la revendication 1, **caractérisé en ce que** les moyens de connexion (30) comprennent deux bras (31) de l'élément mobile (3) qui présentent deux fentes de connexion opposées (32) prédisposées pour encharner la galerie de toit (100) le long du second axe d'encharnement (y).

7. Dispositif de fixation (1) selon la revendication 6, **caractérisé en ce que** l'élément mobile (3) est une fourche qui présente une seconde portion de connexion (35) centrale et planaire qui est encharnée sur l'élément fixe (2), de laquelle seconde portion de connexion (35) sont saillants deux bras (31) qui sont planaires et parallèles entre eux et perpendiculaires à la seconde portion de connexion (35).

8. Dispositif de fixation (1) selon l'une des revendications précédentes, **caractérisé en ce que** l'élément fixe (2) comprend une première portion de connexion (25) planaire et connectée à l'élément mobile (3); les moyens d'ancrage (20) comprenant une portion de fixation (26) planaire et perpendiculaire à la première portion de connexion (25) et présentant une pluralité d'orifices oblongs d'ancrage (27).

9. Dispositif de transport d'objets **caractérisé en ce qu'**il comprend une galerie de toit (100) et une pluralité de dispositifs de fixation (1) selon l'une des revendications précédentes, prédisposés pour accoupler la galerie de toit (100) à un toit d'un véhicule motorisé (101).
